Europäisches Patentamt

European Patent Office

Office européen des brevets

(11) Veröffentlichungsnummer: **0 163 157**
**A1**

(12) **EUROPÄISCHE PATENTANMELDUNG**

(21) Anmeldenummer: 85105319.9

(22) Anmeldetag: 02.05.85

(51) Int. Cl.⁴: **H 04 L 11/16**
**H 04 L 11/08**

(30) Priorität: 29.05.84 CH 2625/84

(43) Veröffentlichungstag der Anmeldung:
04.12.85 Patentblatt 85/49

(84) Benannte Vertragsstaaten:
CH DE GB LI SE

(71) Anmelder: BBC Aktiengesellschaft Brown, Boveri & Cie.
Haselstrasse
CH-5401 Baden(CH)

(72) Erfinder: Güth, Reinhold, Dr.
Kornweg 6a
CH-5415 Nussbaumen(CH)

(72) Erfinder: Züger, Stefan
Martinsbergstrasse 24
CH-5400 Baden(CH)

(54) Datenaustauschverfahren.

(57) In veteilten digitalen Systemen mit mehreren Teilnehmern – Digitalrechnern, Ein-/Ausgabergeräten – an einem Datenaustausch, in denen das Prinzip der Quellenidentifikation von Nachrichten angewandt wird, kann es versehentlich bei der Projektierung oder Programmierung oder bei der Wartung des Systems oder infolge von Hardwarefehlern zur ungewollten mehrfachen Verwendung einer Quellenadresse kommen. Zur Erkennung und gegebenenfalls zur Anzeige einer Mehrfachverwendung von Quellenadressen während des Betriebs des Systems vergleicht jeder Nachrichten empfangende Teilnehmer, während er im Empfangszustand ist, eine Empfangsquelledresse ($A_i$) der Nachricht eines anderen sendenden Teilnehmers mit mindestens einer eigenen Quellenadresse ($A_j$) in einer assoziativen Adressenvergleichsschaltung (13). Falls die Empfangsquelleadresse (A) gleich einer eigenen Quellenadresse (A) ist, so wird über eine Quellensignalleitung (17) ein Fehlersignal geliefert.

FIG. 2

29.5.84
Rz/SC

- 1 -

## Datenaustauschverfahren

Bei der Erfindung wird ausgegangen von einem Datenaustauschverfahren in verteilten digitalen Systemen mit mehreren Teilnehmern an einem Datenaustausch nach dem Oberbegriff des Patentanspruchs 1.

Mit diesem Oberbegriff nimmt die Erfindung auf einen Stand der Technik von Datenaustauschverfahren in verteilten digitalen Systemen mit mehreren Teilnehmern an einem Datenaustausch Bezug, wie er in der CH-PS 632 365 beschrieben ist. Dort ist ein Datenaustauschverfahren zwischen mehreren Teilnehmern bzw. Partnern und deren Prozessoren angegeben, bei denen für zu übertragende Nutz-Nachrichten ausser diesen eine Absenderadresse, aber keine Empfängeradresse übertragen wird. Alle aktiven Teilnehmer entscheiden anhand der Absenderadresse und des Datentyps, ob die Nutz-Nachricht für sie von Interesse ist. Jeder Nachrichtenquelle ist somit eine im Regelfall eindeutige, exklusive Teilnehmer- bzw. Quellenadresse zugeordnet. Alle Nachrichten eines Teilnehmers enthalten dessen Teilnehmeradresse und werden über das Kommunikationsnetz global im System bekannt gemacht. Zu einem Zeitpunkt kann nur ein Teilnehmer im System seine Nachricht verbreiten. Jeder Teilnehmer weist ein

0163157
51/84

Empfangsteil auf, mit dem er alle gesendeten Nachrichten empfängt und diejenigen herausfiltert, für die er Senken besitzt. Mit Senken sind Adressen von Teilnehmern bezeichnet, an deren Nutz-Nachrichten der jeweilige Teilnehmer Interesse hat. Beim Betrieb eines derartigen quellenadressierten Systems gibt es in der Regel keine zwei Teilnehmer mit gleicher Adresse. Bei der Zuordnung der Adressen zu den Quellen ist also bei der Projektierung oder Programmierung darauf zu achten, dass keine Adresse für mehr als eine Quelle verwendet wird. Eine Verletzung dieser Regel führt dazu, dass die von der mehrdeutigen Quellenadresse betroffenen Senken - in willkürlicher oder zufälliger Reihenfolge - Nachrichten von mehreren Quellen empfangen. Die Quelle der Nachrichten ist in diesem Fall durch die Adresse nicht eindeutig bestimmt.

Die Eindeutigkeit von Quellenadressen ist normalerweise Grundlage der ordnungsgemässen Funktion eines verteilten Systems mit Quellenadressierung. In bestimmten Situationen werden Verstösse gegen die Eindeutigkeit bewusst in Kauf genommen. Im Rahmen der Wartung eines Systems kann z.B. ein Gerät durch ein anderes mit gleicher oder nahezu gleicher Funktion ersetzt werden. Beide Geräte beinhalten Quellen mit gleichen Adressen. Das neue Gerät kann in das laufende System eingefügt werden, bevor das alte Gerät entfernt wird, um eine unterbrechungslose Funktion des Gesamtsystems zu gewährleisten. Für eine kurze Uebergangszeit werden dann bewusst doppelt verwendete Quellenadressen in Kauf genommen.

Eine unbeabsichtigte mehrfache Verwendung von Quellenadressen kann jedoch erhebliche Systemstörungen bewirken. Als Beispiel seien zwei Fehlerarten genannt:
- Durch Fehler bei der Projektierung und bei der Programmierung von Geräten kann es dazu kommen, dass Quellenadressen versehentlich mehrfach verwendet werden.

- Hardwarefehler in den Geräten können - während des Betriebs einer Anlage - zur Veränderung von Quellenadressen und somit auch zur ungewollten mehrfachen Verwendung einer Quellenadresse führen.

Die Eindeutigkeit von Quellenadressen ist eine so grundlegende Eigenschaft an verteilten Systemen mit Quellenadressierung, dass es von grossem Nutzen ist, wenn bewusste und insbesondere unerwünschte Abweichungen von dieser Eigenschaft - während des Betriebes - erkannt und angezeigt werden.

Der Erfindung, wie sie im Patentanspruch 1 definiert ist, liegt die Aufgabe zugrunde, ein Datenaustauschverfahren anzugeben, das eine Erkennung einer mehrfachen Verwendung von Quellenadressen in verteilten Systemen ermöglicht.

Ein Vorteil der Erfindung besteht darin, dass Systemstörungen infolge einer Mehrfachadressierung schnell und auch beim Betrieb des Systems erkannt werden können. Die Erfindung kann in allen quellenadressierten Systemen eingesetzt werden und ermöglicht eine bessere Wartbarkeit und Betriebssicherheit dieser Systeme. Beim Zuschalten eines Gerätes an ein laufendes System kann sofort angezeigt werden, ob die Zuschaltung des Gerätes zu einer doppelten (mehrfachen) Belegung von Quellenadressen führt. Jedes einzelne Gerät (nicht notwendigerweise alle Geräte eines Systems) überwacht in der Zeit, in der es nicht selbst sendet, das Kommunikationsnetz und vergleicht die Adressen der übertragenen Nachrichten mit den Adressen seiner Quellen. Uebereinstimmungen bedeuten doppelt verwendete Quellenadressen un werden angezeigt.

Zur Erkennung der mehrfachen Verwendung der Adressen eigener Quellen eines Gerätes sind die Adressen übertragener Nachrichten jeweils mit den Adressen aller Quellen des Gerätes zu vergleichen. Wenn die Adresse einer übertragenen Nachricht mit einem der Einträge in der Liste der Quellenadressen übereinstimmt, so wird eine mehrfache Verwendung von Quellenadressen angezeigt.

Die Erkennung der mehrfachen Verwendung von Quellenadressen kann mit Schaltungen durchgeführt werden, die völlig gleich oder weitgehend gleich sind zu den Adressenvergleichsschaltungen bzw. Assoziativspeicherschaltungen, wie sie für den Empfang quellenadressierter Nachrichten notwendig sind.

Ein weiterer Vorteil besteht darin, dass ein Adressenvergleich übertragener Nachrichten mit der Senkenliste (Empfangsfunktion) und der Quellenliste (mehrdeutige Quellenadresse) durch ein und dieselbe Funktionseinheit erfolgt.

Die Erfindung wird nachstehend anhand von Ausführungsbeispielen erläutert. Es zeigen:

Fig. 1 ein Blockschaltbild einer Ueberwachungsschaltung für mehrere Quellen und Senken,

Fig. 2 eine schematische Darstellung eines Quellen-Senken-Adressenspeichers und einer Adressenvergleichsschaltung für eine Ueberwachungsschaltung gemäss Fig. 1,

Fig. 3 eine gemeinsame Quellen- und Senkenliste eines Quellen- und Senken-Adressenspeichers und

Fig. 4 getrennte Adressenvergleichsschaltungen für Adressen der Quellen- und Senkenliste.

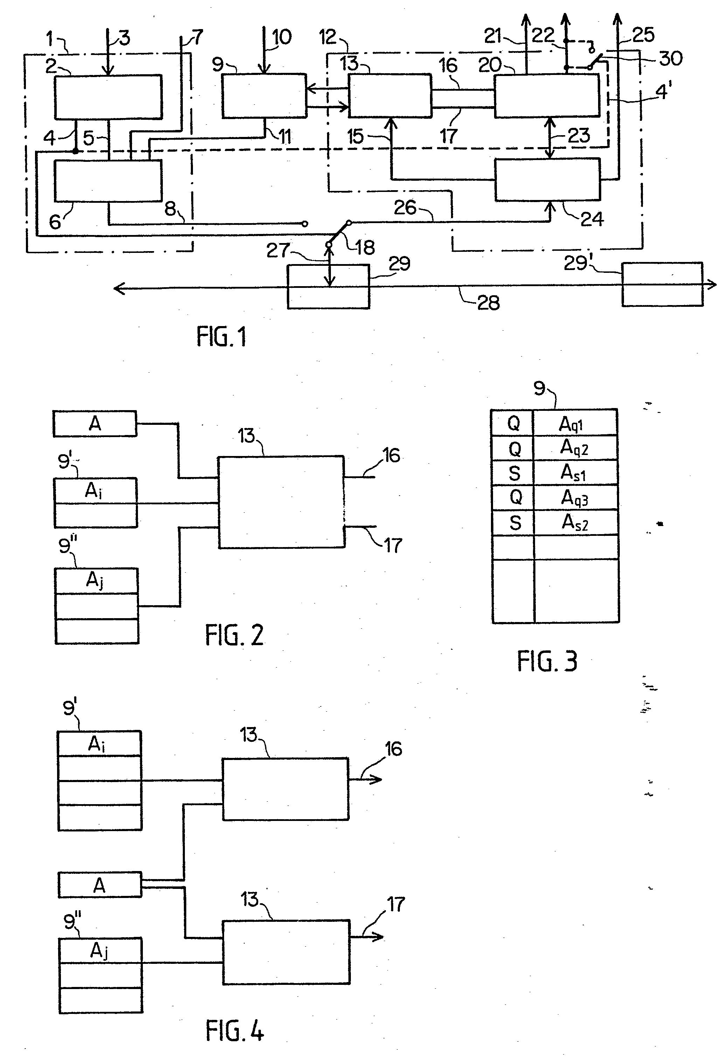

In Fig. 1 ist mit 1 ein Sender bzw. ein Senderteil, mit 2 ein Sendesteuerwerk und mit 6 ein Parallel-Serie-Wandler bezeichnet. Das Sendesteuerwerk 2 erhält bei Sendererlaubnis von einer nicht dargestellten zentralen Steuerung über eine Startsignalleitung 3 ein Startsignal "Senden", welches das Senden einer Nachricht auslöst. In Abhängigkeit von diesem Startsignal 3 wird von dem Sendesteuerwerk 2 über eine Steuerleitung 4 eine Sende-Empfangs-Umschalteinrichtung 18 bezüglich der gezeichneten Position umgeschaltet, so dass der Ausgang des Parallel-Serie-Wandlers 6 mit einer Busankopplungsleitung 27 in leitender Verbindung steht. Ueber eine Leitung 5 wird der Parallel-Serie-Wandler 6 vom Sendesteuerwerk 2 aktiviert. Dann wird eine Senderquelleadresse von einem Quellen-Senken-Adressenspeicher 9 über eine Senderadressignalleitung 11, die dem Sender 1 als Absenderadresse zugeordnet ist, ferner über den Parallel-Serie-Wandler 6, eine Sendedatenausgangssignalleitung 8, die Sende-Empfangs-Umschalteinrichtung 18 und die Busankopplungsleitung 27 an einen Busankoppler 29 übergeben. Die Senderquelleadresse wird durch ein Senderquelleadressignal zur Ausgabe aktiviert. Danach wird der Inhalt eines nicht dargestellten Sendespeichers über eine Sendedatensignalleitung 7 in den Parallel-Serie-Wandler 6 geladen und von dort an den Busankoppler 29 übergeben. Der Busankoppler 29 legt die Nachricht nach einer entsprechenden Anpassung auf einen Bus bzw. eine allen Teilnehmern gemeinsame Datenschiene 28.

29' bezeichnet den Busankoppler eines weiteren, nicht näher dargestellten Teilnehmers am Datenaustausch.

Mit 12 ist ein Empfänger bzw. Empfängerteil bezeichnet, dem ein Mehrfachvergleicher 13, der Zugriff zu den Quellen-Senken-Adressenspeicher 9 hat, ein Empfangssteuerwerk 20 und ein Serie-Parallel-Wandler 24 zugeordnet ist. Der Mehrfachvergleicher 13 erhält die über den Bus 28 mit einer Nachricht gesendete und vom Empfänger 12 empfangene Absender- bzw. Empfangsquelleadresse A, vgl. Fig. 2 und 4, über die Busankopplungsleitung 27, die Sende-Empfangs-Umschalteinrichtung 18 in der dargestellten Schaltposition, eine Empfangsdateneingangssignalleitung 27, den Serie-Parallel-Wandler 24 und eine Empfangsadressignalleitung 15. Die Sende-Empfangs-Umschalteinrichtung 18 befindet sich in der dargestellten Empfangsposition, ausser wenn er während des Sendens durch das Sendesteuerwerk 2 aktiviert und umgesteuert ist. Der Serie-Parallel-Wandler 24 wird vom Empfangssteuerwerk 20 über eine Leitung 23 gesteuert; er stellt dem empfangenden Teilnehmer die Nutz-Nachricht über eine Empfangsdaten-Signalleitung 25 zur Verfügung.

Der Mehrfachvergleicher 13 vergleicht die Empfangsquelleadresse A zunächst mit Adressen $A_i$ einer Senkenadressenliste, um zu bestimmen, ober der Teilnehmer für diese Nachricht eine Senke S aufweist und wo die Nachricht gegebenenfalls abzulegen ist. Danach vergleicht der Mehrfachvergleicher 13 die Empfangsquelleadresse A mit Adressen $A_j$ einer Quellenadressenliste, die beide in dem Quellen-Senken-Adressenspeicher 9 in einem Senkenadressenliste-Speicherbereich 9' bzw. in einem Quellenadressenliste-Speicherbereich 9" gespeichert sind, vgl. Fig. 2, um doppelt belegte Quellenadressen zu erkennen.

Eine Quelle Q kann ein bestimmtes Gerät, z.B. ein Eingabegerät oder ein Geräteteil oder ein bestimmter Eingang eines Eingabegerätes oder ein Programm oder ein Programmteil auf einem Rechner bzw. auf einem rechnerähnlichen programmierbaren Gerät, wie z.B. einem programmierbaren Steuergerät, sein.

Jeder Nachrichtenquelle ist eine - im Regelfall eindeutige - exklusive Quellenadresse $A_j$ zugeordnet, vgl. Fig. 2. Alle Nachrichten einer Quelle Q enthalten die entsprechende Quellenadresse $A_j$ und werden über das Kommunikationsnetz bzw. über den Bus 28 im System global bekanntgemacht. Alle an dem Bus 28 angeschlossenen Teilnehmer bzw. Geräte können die Nachricht hören bzw. empfangen und anhand der Empfangsquelleadressen A deren Herkunft identifizieren. Ein Gerät kann eine oder mehrere Quellen $A_j$ enthalten.

Jeder Senke S ist eine Senkenadresse $A_i$ aus der Menge der im System benutzten Quellenadressen $A_j$ zugeordnet. Eine Senke S übernimmt alle Nachrichten, die mit dieser Senkenadresse $A_i$ bezeichnet sind, d.h., eine Senke S übernimmt alle Nachrichten einer bestimmten Quelle Q. Ein Gerät kann eine oder mehrere Senken S enthalten, d.h., Nachrichten von einer oder von mehreren Quellen Q empfangen.

Der Mehrfachvergleicher 13 in einem Teilnehmer bzw. einem Gerät, das an ein quellenadressiertes System angeschlossen ist, vergleicht die Quelleadressen A aller über den Bus 28 übertragenen Nachrichten mit den Quellenadressen, für die das Gerät Senken S besitzt, d.h., es vergleicht jede Empfangsquelleadresse A mit seinen Senkenadressen $A_i$. Der Empfänger 12 filtert aus der Menge der über den Bus 28 übertragenen Nachrichten diejenigen heraus, für die das Gerät Senken S besitzt. Beim Adressenvergleich im Mehrfachvergleicher 13 ist die Empfangsquelleadresse A der Nachricht mit allen Einträgen in einer Liste von Adressen $A_i$, für die das Gerät Senken S besitzt, zu vergleichen. Nur wenn die Adresse A der Nachricht mit einer der Adressen $A_i$ in der Senkenadressenliste übereinstimmt, wird die Nachricht bzw. das Telegramm übernommen.

Der Mehrfachvergleicher 13 liefert in Abhängigkeit davon, dass die Empfangsquelleadresse A gleich einer Senkenadresse $A_i$ aus der Liste der Senkenadressen ist, ein dieses Vergleichsergebnis kennzeichnendes Signal über eine Senkensignalleitung 16 an das Empfangssteuerwerk 20, welches daraufhin über eine Gültig-Signalleitung 21 ein "Gültig"-Signal erzeugt. Für den Fall, dass die Empfangsquelleadresse A gleich einer Quellenadresse $A_j$ aus der Liste der Quellenadressen ist, liefert der Mehrfachvergleicher 13 ein dieses Vergleichsergebnis kennzeichnendes Signal über eine Quellensignalleitung 17 an das Empfangssteuerwerk 20, welches daraufhin über eine Fehlersignalleitung 22 ein Fehlersignal mit der Information "mehrfach belegte Quellenadresse" erzeugt. In Abhängigkeit vom Auftreten dieses Fehlersignals wird in üblicher Weise eine Warn- oder Alarmeinrichtung betätigt.

Der Adressenvergleich kann nach einem von mehreren bekannten Verfahren und in unterschiedlichen Realisierungsformen erfolgen, z.B. mittels Assoziativspeicherschaltungen oder mit Schaltungen zum sequentiellen oder binären Durchsuchen oder mittels Mikroprozessorprogrammen oder Hardwareschaltungen, welche das Prinzip des sogenannten Hashing anwenden.

Bei dem in Fig. 3 gezeigten Ausführungsbeispiel ist die Senkenliste und die Quellenliste zu einer Liste vereinigt, wobei Quellen Q und Senken S durch entsprechende Kennzeichen voneinander unterschieden werden. Senken- und Quellenadressen $A_{q1}$, $A_{q2}$, $A_{q3}$ ... und $A_{s1}$, $A_{s2}$ ... können dabei nach bestimmten Kriterien, z.B. nach aufsteigenden Adressen ($A_{q1}$  $A_{q2}$, $A_{q2}$  $A_{s1}$, $A_{s1}$  $A_{q3}$, $A_{q3}$  $A_{s2}$) geordnet sein, um ein Durchsuchen der Tabelle nach bestimmten Methoden, z.B. binärem Suchen (oder Hashing), zu erleichtern.

Bei dem in Fig. 4 dargestellten Ausführungsbeispiel wird die Empfangsquelleadresse A von zwei separaten, gleichen assoziativen Adressvergleichsschaltungen bzw. Mehrfachvergleichern 13 mit den Adressen $A_i$ der Senkenliste und den Adressen $A_j$ der Quellenliste verglichen. Die Vergleiche erfolgen parallel und weitgehend unabhängig voneinander.

Das erfindungsgemässe Verfahren kann in allen quellenadressierten Systemen eingesetzt werden, z.B. bei verteilten

0163157
51/84

Datenbanken und Büroautomatisierungssystemen. Die Sicherheit prozessnaher Leitsysteme lässt sich durch Anwendung dieses Verfahrens mit geringem Mehraufwand steigern.

Die am Datenaustausch beteiligten Teilnehmer können z.B. Digitalrechner sowie Ein-/Ausgabegeräte sein, die über ein Kommunikationsnetz miteinander verbunden sind und geographisch verteilt angeordnet sein können. Nachrichten mit Quellenidentifikation können zusätzlich noch Zieladressen enthalten.

Anstelle der Sende-Empfangs-Umschalteinrichtung 18 kann auch eine Umschalteinrichtung wie bei der CH-PS 632 365 verwendet werden. Bei der dort verwendeten Umschalteinrichtung können die Sendedatenausgangssignalleitung 8 und die Empfangsdaten-Eingangssignalleitung 26 gleichzeitig über den Busankoppler 29 auf den Bus 28 geschaltet oder, bei Selbstprüfung, gleichzeitig vom Bus getrennt sein. Bei einer derartigen Schaltung kann z.B. in der Fehlersignalleitung 22 ein Fehlersignalschalter 30 angeordnet sein, der während des Sendens des Teilnehmers geöffnet und ansonsten geschlossen ist. Das Schaltsignal kann über eine Steuerleitung 4' geliefert werden.

## Patentansprüche

1. Datenaustauschverfahren in verteilten digitalen Systemen mit mehreren Teilnehmern an einem Datenaustausch,

   a) wobei jeder Teilnehmer mindestens ein Eingabegerät (1), dem mindestens eine Quellenadresse ($A_j$) zugeordnet ist, und/oder

   b) mindestens ein Empfangsgerät (12), dem mindestens eine Senkenadresse ($A_i$) zugeordnet ist, sowie

   c) mindestens eine assoziative Adressenvergleichsschaltung (13) aufweist,

   d) bei welchem Verfahren jede übertragene Nachricht mit einer Quellenadresse ($A_j$) versehen wird,

   dadurch gekennzeichnet,

   e) dass jeder empfangende Teilnehmer, während er im Empfangszustand ist, die Quellenadresse (A) der Nachricht eines anderen sendenden Teilnehmers mit mindestens einer eigenen Quellenadresse ($A_j$) vergleicht und

   f) in Abhängigkeit von einer Uebereinstimmung der gesendeten Quellenadresse (A) mit einer eigenen Quellenadresse ($A_j$) ein Fehlersignal erzeugt.

2. Datenaustauschverfahren nach Anspruch 1, dadurch gekennzeichnet, dass parallel zu dem Vergleich der Quellenadresse (A) der Nachricht eines anderen sendenden Teilnehmers mit mindestens einer Quellenadresse ($A_j$) des empfangenden Teilnehmers ein Vergleich dieser Quellenadresse (A) mit den Senkenadressen ($A_i$) des empfangenden Teilnehmers erfolgt.

3. Datenaustauschverfahren nach Anspruch 1, dadurch gekennzeichnet, dass die Adressen der Quellen ($A_{q1}$, $A_{q2}$, $A_{q3}$) und Senken ($A_{s1}$, $A_{s2}$) mindestens eines empfangen-

den Teilnehmers am Datenaustausch je durch besondere Quellen-/Senken-Kennzeichen (Q, S) markiert und gemeinsam nach steigenden Adressen geordnet werden.

4. Datenaustauschverfahren nach Anspruch 3, dadurch gekennzeichnet, dass ein Durchsuchen der geordneten Folge von Quellen- und Senken-Adressen ($A_{q1}$, $A_{q2}$, $A_{s1}$, $A_{q3}$, $A_{s2}$) nach einem binärem Suchverfahren erfolgt.

FIG.1

FIG. 2

FIG. 3

FIG.4

**0163157**

Nummer der Anmeldung

**EP 85 10 5319**

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | IEEE ELECTRO, Band 7, 1982, Mai 1982, Seiten 17/4, 1-9, New York, US; M. STIEGLITZ: "Semiconductor encapsulation of token based lan's" * Seite 5, linke Spalte, Zeilen 3-18 * | 1 | H 04 L 11/16 H 04 L 11/08 |
| A | idem | 2 | |
| A | PROCEEDINGS OF THE IEEE, Band 66, Heft 11, November 1978, Seiten 1497-1517; D.D. CLARK et al.: "An introduction to local area networks" * Abschnitt III.E; Seite 1507, linke Spalte, Zeilen 30-48 * | 1,3,4 | |
| A | A. RALSTON et al.: "Encyclopedia of computer science", 1. Auflage, 1976, Seiten 165,166, Van Nostrand Reinhold Co., New York, US * Insgesamt * | 3,4 | RECHERCHIERTE SACHGEBIETE (Int. Cl.4) H 04 L |
| A | GB-A-2 013 452 (PATELHOLD)(8. August 1979) * Zusammenfassung * & CH - A - 632 365 (In der Anmeldung erwähnt) | 1 | |

Der vorliegende Recherchenbericht wurde für alle Patentansprüche erstellt.

| Recherchenort | Abschlußdatum der Recherche | Prüfer |
|---|---|---|
| DEN HAAG | 03-09-1985 | MIKKELSEN C. |